# EUROPÄISCHE PATENTSCHRIFT

(11) **EP 2 418 366 B1**
(45) Veröffentlichungstag und Bekanntmachung des Hinweises auf die Patenterteilung: **13.03.2013**
(21) Anmeldenummer: 10172629.7
(22) Anmeldetag: 12.08.2010
(51) Int. Cl.: F02B 37/18, F02B 37/24, F16K 31/528

(54) **Aktuator für ein Wastegate oder eine variable Turbinengeometrie sowie Verwendung eines Aktuators für ein Wastegate oder eine variable Turbinengeometrie**
Actuator for a wastegate or a variable turbine geometry and use of an actuator for a wastegate or a variable turbine geometry
Actionneur pour une soupape de décharge ou une géométrie de turbines variable et utilisation d'un actionneur pour une soupape de décharge ou une géométrie de turbine variable

(43) Veröffentlichungstag der Anmeldung: 15.02.2012
(73) Patentinhaber: Cooper-Standard Automotive (Deutschland) GmbH, 89601 Schelklingen (DE)
(72) Erfinder: Klipfel, Bernhard, 76187, Karlsruhe (DE); Thiery, Christoph, 68239, Mannheim (DE); Janik, Arthur, 68723, Oftersheim (DE)
(74) Vertreter: HOFFMANN EITLE

(56) Entgegenhaltungen:
- EP-A1- 1 637 784
- EP-A1- 2 172 682
- EP-A2- 2 169 268
- WO-A1-2005/021954
- WO-A1-2009/010711
- DE-A1-102008 004 688
- JP-A- 2005 315 179
- JP-A- 2006 274 833
- JP-A- 2007 262 964
- US-A- 4 251 050
- US-A- 5 701 741

## Beschreibung

### Technisches Gebiet

Die Erfindung betrifft einen Aktuator für ein Wastegate oder eine variable Turbinengeometrie.

Abgasturbolader weisen üblicherweise ein sogenanntes Wastegate auf, um in bestimmten Situationen das heiße Abgas nicht der Turbine des Turboladers zuzuführen, um den Ladedruck entsprechend zu regulieren. Das Wastegate kann darüber hinaus dazu genutzt werden, das heiße Abgas abzuführen, um beispielsweise einen Katalysator zu erwärmen und dadurch die ausgestoßenen Schadstoffe zu reduzieren. Ferner kann die Charakteristik des Abgasturboladers durch Verstellung einer variablen Turbinengeometrie eingestellt werden.

### Stand der Technik

Bislang werden hierfür als Aktuatoren üblicherweise pneumatische Stellantriebe eingesetzt.

### Darstellung der Erfindung

Der Erfindung liegt die Aufgabe zugrunde, einen verbesserten Aktuator für ein Wastegate oder eine variable Turbinengeometrie eines Abgasturboladers zu schaffen.

Die Lösung dieser Aufgabe erfolgt durch den im Anspruch 1 beschriebenen Aktuator.

Demzufolge weist der erfindungsgemäße Aktuator oder - Stellantrieb einen Drehantrieb auf, der zunächst, gegebenenfalls unter Zwischenschaltung eines geeigneten Getriebes, ein Gewindeelement drehend antreibt. Mit dem Gewindeelement wirkt ein Stößel zusammen, der mit dem Gewindeelement derart in Eingriff ist, dass die Drehbewegung des Gewindeelements in eine Hubbewegung des Stößels umgewandelt wird. Der Stößel ist seinerseits mit dem klappbaren Wastegate und/oder einer variablen Turbinengeometrie eines Abgasturboladers verbunden. Somit wird der an dem Stößel erzeugte Hub beispielsweise für das Auf- und Zuklappen des Wastegates verwendet.

Der Stößel, der mit einem klappbaren Wastegate oder einer variablen Turbinengeometrie verbunden ist, und/oder eine Achse zwischen dem Stößel und dem Gewindeelement ist in zumindest einer Führung mit zumindest einem Steg aufgenommen, die zumindest eine geringfügige Kipp- oder Schwenkbewegung des Stößels in zumindest einer Richtung zulässt. Hierbei ist zu beachten, dass das oben beschriebene Funktionsprinzip eines Stellantriebs bislang in erster Linie bei translatorisch bewegten Ventilelementen, mit anderen Worten bei Tellerventilen eingesetzt wurde, während ein Wastegate üblicherweise im Rahmen seiner Betätigung verschwenkt bzw. auf- und zugeklappt wird. Deshalb beschreibt der zu dem Wastegate gerichtete Endpunkt des Stößels, der mit einem geeigneten Hebel des Wastegates verbunden ist, eine Kreisbahn. Die entsprechende, zumindest geringfügige Auslenkung des Stößels kann durch die oben beschriebene Maßnahme in vorteilhafter Weise zugelassen werden. Hierbei wirkt diejenige Stelle, an der sich der Stößel zur Umwandlung der Drehbewegung des Gewindeelements in eine Hubbewegung mit dem Gewindeelement in Eingriff befindet, im Wesentlichen als Drehpunkt. Folglich zeigt sich hier die vorteilhafte Kompatibilität des beschriebenen Funktionsprinzips mit einem klappbaren Wastegate. Die mögliche Auslenkung kann in beide Richtungen beispielhaft etwa 2 mm und/oder etwa ± 3° betragen. Dieses Prinzip kann zum einen ein Spiel des Stößels in einer Führungsbuchse nutzen. Eine derartige Führungsbuchse ist jedoch nicht unbedingt erforderlich, weil der ventilseitige Endpunkt des Stößels durch die Kopplung mit dem Wastegate oder der variablen Turbinengeometrie definiert ist. Insoweit kann eine Führungsbuchse an dem Stößel entfallen, und hier kann lediglich ein Faltenbalg vorgesehen sein. Die Führung des Stößels kann ferner in einem Bereich zwischen dem Stößel und dem Gewindeelement, insbesondere im Bereich einer Achse erfolgen, die an dem Stößel angebracht ist, und an der bevorzugt eine Rolle zur Zusammenwirkung mit dem Gewindeelement vorgesehen ist. Die Achse und/oder der Stößel können beispielsweise durch geeignete Stufen, Rücksprünge, Vorsprünge oder dergleichen mit komplementären Konturen an einer Translationsführung zusammenwirken. Die Führung kann hierbei, wie nachfolgend unter Bezugnahme auf die Zeichnungen näher erläutert, axial und/oder radial erfolgen und in sämtliche Richtungen derart spielbehaftet sein, dass die oben beschriebene Kipp- oder Schwenkbewegung ermöglicht wird.

Der beschriebene Aktuator bietet den Vorteil, dass es sich um ein in vielerlei Hinsicht bewährtes und erprobtes Funktionsprinzip handelt, das bislang jedoch lediglich im Zusammenhang mit Abgasrückführventilen eingesetzt wurde. Von besonderem Vorteil sind in diesem Zusammenhang die Temperaturbeständigkeit, die problemlose Anpassung des Hubes an besondere Anwendungsfälle, die Realisierung hoher Stellkräfte einschließlich der Möglichkeit, nicht lineare Kraftverläufe darzustellen, das insgesamt reibungs- und verschleißarme Design sowie die Möglichkeit der Verwendung bewährter Einzelteile und Komponenten bei dem neuen Einsatz. Ferner können im Zusammenhang mit der vorliegenden Erfindung weitere Einsparungsmöglichkeiten dahingehend genutzt werden, dass im Gegensatz zu dem Einsatz bei einem Abgasrückführventil beispielsweise eine Rückstellfeder entfallen kann, bestimmte Abdichtungen nicht so zuverlässig abdichten müssen, wie dies bei einem Abgasrückführventil der Fall ist, und an bestimmten Stellen aufgrund der, verglichen mit zurückzuführendem, besonders heißem Abgas, geringeren Temperaturen kostengünstigere Materialien verwendet werden können. Ferner ist der erfindungsgemäße Aktuator für sämtliche linear verstellbaren Regelorgane verwendbar und kann hierbei insbesondere Pneumatik- und/oder Vakuum-Aktuatoren oder ähnliche Aktuatoren ersetzen. Insbesondere lässt sich durch den erfindungsgemäßen Aktuator eine bessere Regelgüte erreichen.

Im Hinblick auf die Detailgestaltung des erfindungsgemäßen Aktuators sei auf die europäische Patentanmeldung 08 165 906.2 sowie die EP 1 526 271 Al der Anmelderin verwiesen, deren Offenbarung im Hinblick auf die Gestaltung des Stellantriebs vollumfänglich zum Gegenstand der vorliegenden Anmeldung gemacht wird. Sämtliche darin beschriebenen Maßnahmen können in vorteilhafter Weise auch bei dem hierin beschriebenen Aktuator eingesetzt werden. Als Hub hat sich für die Verwendung bei einem Wastegate eine Größenordnung von etwa 10 mm bis 12 mm, insbesondere etwa 11 mm als vorteilhaft erwiesen. Ferner können die geometrischen Gegebenheiten beispielsweise so sein, dass ein Öffnungswinkel von 20° bis 25°, insbesondere etwa 22° für das Wastegate realisiert wird. Die Position des Stößels, der auch als Stange bezeichnet werden kann, kann in vorteilhafter Weise beispielsweise durch einen besonders genauen kontaktlosen Positionssensor, wie z.B. einen Hallsensor, erfasst werden.

Bevorzugte Weiterbildungen des erfindungsgemäßen Aktuators sind in den weiteren Ansprüchen beschrieben.

Für das Gewindeelement wird bevorzugt, dass dieses zumindest zwei Bereiche unterschiedlicher Steigung aufweist, so dass in vorteilhafter Weise eine nicht lineare Kraftcharakteristik realisierbar ist. Beispielsweise hat sich bei ersten Versuchen eine Steigung von 3 mm bis 4 mm, bevorzugt zwischen 3,5 mm und 4 mm, insbesondere etwa 3,6 mm über einen Winkelbereich von 80° bis 120°, insbesondere etwa 100° als vorteilhaft erwiesen. Durch diese vergleichsweise flache Steigung kann zu Beginn der Öffnung eine besonders hohe Stellkraft erzeugt werden. Hieran kann sich ein Bereich von etwa 360° mit einer Steigung von 10 mm bis 12 mm, insbesondere etwa 11 mm anschließen.

Wenn der Stößel bezüglich der Achse des Gewindeelements geneigt ist, oder sogar, wie bevorzugt, der Eingriff zwischen dem Stößel und dem Gewindeelement in einer Richtung erfolgt, die im Wesentlichen senkrecht zur Wirkfläche des Gewindeelements ist, bietet dies den Vorteil, dass eine auf den Stößel aufgebrachte Kraft nicht zu einer unbeabsichtigten Verdrehung des Gewindeelements führen kann.

Im Hinblick auf die Vermeidung von Reibung hat es sich darüber hinaus als vorteilhaft erwiesen, wenn der Stößel über zumindest eine Rolle mit dem Gewindeelement zusammenwirkt. Bevorzugt ist die Rolle ballig ausgeführt, so dass eine vorteilhafte Kipp- oder Schwenkbewegung nicht nur um die Achse der Rolle stattfinden kann, sondern auch senkrecht hierzu. Die Rolle kann in diesem Fall vorteilhafterweise als Kugelgelenk wirken.

### Kurze Beschreibung der Zeichnungen

Nachfolgend wird eine beispielhaft in den Figuren dargestellte Ausführungsform der Erfindung näher erläutert. Es zeigen:
- Fig. 1: eine perspektivische Schnittansicht eines erfindungsgemäßen Aktuators;
- Fig. 2: eine perspektivische Ansicht des erfindungsgemäßen Aktuators mit dem damit verbundenen Wastegate;
- Fig. 3: eine Detailansicht des erfindungsgemäßen Aktuators; und
- Fig. 4: eine Schnittansicht einer zweiten Ausführungsform des erfindungsgemäßen Aktuators.

### Ausführliche Beschreibung einer bevorzugten Ausführungsform

### der Erfindung

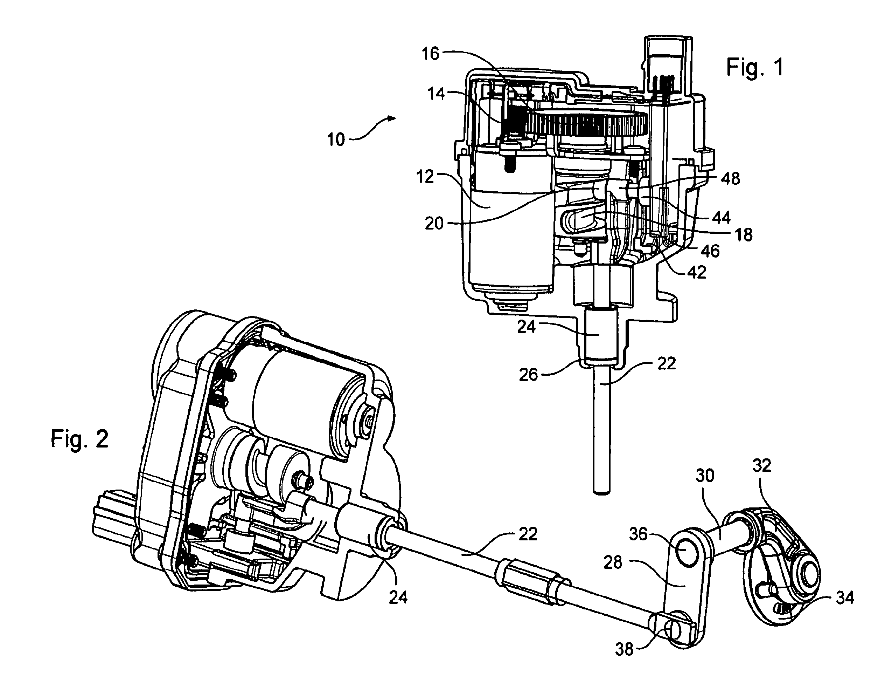

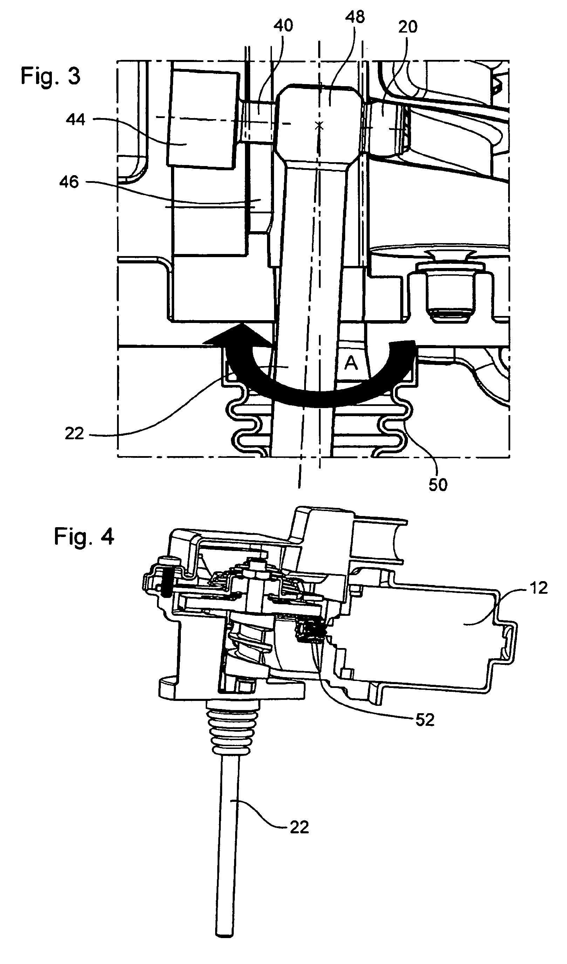

Wie in Fig. 1 zu erkennen ist, weist der erfindungsgemäße Aktuator 10 einen Drehantrieb 12 auf, dessen Drehbewegung in dem gezeigten Fall über ein geeignetes Getriebe mit einem Ritzel 14 und einem Zahnrad 16 auf ein sogenanntes Gewindeelement 18 übertragen wird. Hierbei handelt es sich im Wesentlichen um eine Schnecke, die auch als "worm" bezeichnet werden kann. In vorteilhafter Weise kann diese Schnecke in dem Gehäuse selbst, in dem auch der Drehantrieb 12 aufgenommen ist, geführt und gelagert sein. Ein separates Lager kann in vorteilhafter Weise entfallen. Das Gewindeelement 18 weist in dem gezeigten Fall etwa eineinhalb Gewindegänge auf und wirkt mit einer Rolle 20 zusammen, die drehbar an einer Achse 40 am oberen Ende eines Stößels 22 angebracht ist. Wie anhand der Figur zu erkennen ist, bewirkt eine Verdrehung des Gewindeelements 18 eine translatorische Bewegung des Stößels 22, gemäß der Ausrichtung von Fig. 1 eine Auf-/Abbewegung. Der in Fig. 1 gezeigte Aktuator ist in besonderer Art und Weise für die Betätigung eines klappbaren Wastegates angepasst. Beispielsweise ist das Zahnrad 16 aus einem speziellen Werkstoff, bevorzugt aus geeignetem Kunststoff oder Metall gefertigt. Eine Rückstellfeder kann entfallen. Verglichen mit dem Aktuator oder Stellantrieb eines Abgasrückführventils ist eine Abdichtung des (gemäß der Ausrichtung von Fig. 1) oberhalb des Gewindeelements 18 vorhandenen Kugellagers nicht notwendig. In der Umgebung der Rolle 20 kann eine Buchse entfallen. Für die für den Stößel 22 vorgesehene Führungsbuchse 24 ist als Werkstoff Kunststoff einsetzbar, und die Abdichtung an dem zu dem Wastegate gerichteten Ende der Führungsbuchse 24 ist mittels einer vergleichsweise einfach gestalteten Dichtscheibe 26 möglich. Zusätzlich zu der Dichtscheibe 26 und/oder der Führungsbuchse 24 kann ein Faltenbalg (vgl. Fig. 3 und 4) vorgesehen sein.

In Fig. 1 ist ferner eine Führung 42 im Bereich der Achse 40 zu erkennen, an der die Rolle 20 gelagert ist. Die Achse 40 weist an dem der Rolle 20 gegenüberliegenden Ende eine Verbreiterung 44 auf, so dass eine Form in der Art eines Pilzes entsteht. In einem (gemäß der Darstellung von Fig. 1) oberen Bereich ist die Führung 42 mit einem in Richtung der Translationsachse, d.h. weitgehend parallel zu dem Stößel 22 verlaufenden Steg 46 versehen, der sich in den Bereich zwischen der Verbreiterung 44 und der sich durch die Anbindung des Stößels 22 ergebenden weiteren Verbreiterung 48 erstreckt. Hier erfolgt (bezüglich der Achse 40) sowohl eine axiale als auch eine radiale Führung, da sich (in Fig. 1 weggeschnitten) gegenüber von dem Steg 46 ein weiterer derartiger Steg befindet. Es sei ergänzend erwähnt, dass die Führung 42 insgesamt aus Kunststoff ausgeführt sein kann. Ferner kann sich der Stößel 22 unmittelbar zu der hülsenartigen Nabe erstrecken, welche die Verbreiterung 48 bildet, ohne dass, wie in Fig. 1 gezeigt, zwischen dem Stößel 22 und der Verbreiterung 48 ein Verbindungsstück im Wesentlichen in der Form eines gespiegelten L vorhanden sein muss.

In Fig. 2 ist zu erkennen, wie der Stößel 22 mit einem Hebel 28 verbunden ist, der über eine Nabe 30 mit einem weiteren Hebel 32 verbunden ist, an dem das klappbare Wastegate 34 angebracht ist. Die beschriebene Anordnung aus den beiden Hebeln 28, 32, dem Wastegate 34 und der Nabe 30 ist um die Drehachse 36 schwenk- oder klappbar. Dies bedeutet im Wesentlichen, dass sich der zu dem Wastegate 34 gerichtete Endpunkt 38 des Stößels 22 zumindest geringfügig in seitlicher Richtung, d.h. im Wesentlichen senkrecht zu seiner Längserstreckung und gemäß der Ausrichtung von Fig. 2 nach oben und unten bewegt. Diese Bewegung kann in vorteilhafter Weise durch eine geeignete zu dem Wastegate 34 hin aufgeweitete Gestaltung der Führungsbuchse 24 zugelassen werden. Die Aufweitung der Führungsbuchse 24 kann insbesondere elliptisch ausgebildet sein. Bei dieser leichten Kippbewegung um beispielsweise ± 3° wirkt die Rolle 20 (vgl. Fig. 1) in vorteilhafter Weise als Drehpunkt.

In Fig. 3 ist die Führung 42 im Detail dargestellt. Hier ist ferner zu erkennen, dass in vorteilhafter Weise zwischen dem Steg 46 und den daran anliegenden Verbreiterungen 44 und 48 ein Spiel von beispielsweise etwa einigen Zehntelmillimetern, insbesondere etwa 3 Zehntelmillimetern vorhanden ist, so dass in der durch den Pfeil A angedeuteten Richtung eine Kipp - oder Schwenkbewegung möglich ist. Dies wird ferner durch die bevorzugt ballige Kontur der Rolle 20 ermöglicht, die ergänzend in Fig. 3 dargestellt ist. Ein radiales Spiel im Bereich der Achse 40 ist nicht notwendigerweise erforderlich, da hier für die Kipp- und Schwenkbewegungen die Achse selbst als Drehachse wirkt. Es sei zusätzlich erwähnt, dass die Rolle 20 insgesamt als Kugelgelenk wirkt, weil eine Kipp - oder Schwenkbewegung um eine gemäß Fig. 3 horizontale Achse im Bereich der gegenständlichen Achse 40 zugelassen wird. Die entsprechenden Freiheitsgrade werden ferner durch den zur Abdichtung des Gehäuses vorgesehenen Faltenbalg 50 ermöglicht, der bei der gezeigten Ausführungsform die in Fig. 1 dargestellte und spielbehaftete Führungshülse 24 ersetzt. In Fig. 3 ist ferner die Anbindung des Ventilstößels 22 über die als Nabe wirkende Verbreiterung 48 unmittelbar an die Achse 40 zu erkennen, wodurch das in Fig. 1 gezeigte Verbindungsstück zwischen der Verbreiterung 48 und dem Stößel 22 entfällt.

Die zusätzliche, in Fig. 4 dargestellte Ausführungsform entspricht im Wesentlichen den vorangehenden Ausführungsformen. Jedoch ist bei dieser Ausführungsform der Drehantrieb 12 in einer derartigen Ausrichtung vorgesehen, dass sich seine Drehachse senkrecht zu dem Ventilstößel 22 erstreckt. Dementsprechend weist das Zahnrad 16 (vgl. Fig. 1) an seiner (zu dem Stößel 22 gerichteten) Unterseite eine ringförmige Verzahnung auf, die mit einem Ritzel 52 des Drehantriebs 12 zusammenwirkt.

## Patentansprüche

1. Aktuator (10) mit einem Drehantrieb (12) und einem Gewindeelement (18) zur Umwandlung der Drehbewegung des Drehantriebs (12) in eine Hubbewegung eines Stößels (22), der mit einem klappbaren Wastegate (34) und/oder einer variablen Turbinengeometrie eines Abgasturboladers verbunden ist,
**dadurch gekennzeichnet, dass**
der Stößel (22) und/oder eine Achse (40) zwischen dem Stößel (22) und dem Gewindeelement (18) in zumindest einer Führung (24, 42) mit zumindest einem Steg (46) aufgenommen ist, die zumindest eine geringfügige Kipp - oder Schwenkbewegung des Stößels (22) in zumindest eine Richtung (A) zulässt, indem zwischen dem Steg und zumindest einer Verbreiterung (44, 48) an dem Stößel (22) und/oder an der Achse (40) Spiel vorhanden ist.

2. Aktuator nach Anspruch 1,
**dadurch gekennzeichnet, dass**
das Gewindeelement (18) zumindest zwei Bereiche unterschiedlicher Steigung aufweist.

3. Aktuator nach einem der vorangehenden Ansprüche,
**dadurch gekennzeichnet, dass**
der Stößel (22) bezüglich einer Achse des Gewindeelements (18) geneigt ist.

4. Aktuator nach einem der vorangehenden Ansprüche,
**dadurch gekennzeichnet, dass**
der Stößel (22) über zumindest eine bevorzugt ballig ausgeführte Rolle (20) mit dem Gewindeelement (18) zusammenwirkt.

## Claims

1. Actuator (10) having a rotary drive (12) and a threaded element (18) for converting the rotational movement of the rotary drive (12) to a reciprocating movement of a plunger (22) which is connected to a folding waste gate (34) and/or a variable turbine geometry of an exhaust turbocharger,
**characterised in that** the plunger (22) and/or a shaft (40) between the plunger (22) and the threaded element (18) is held in at least one guide (24, 42) having at least one web (46), which allows at least a slight tilting or pivot movement of the plunger (22) in at least one direction (A) by the fact that there is play between the web and at least one wider portion (44, 48) on the plunger (22) and/or on the shaft (40).

2. Actuator according to claim 1,
**characterised in that** the threaded element (18) has at least two regions of different pitch.

3. Actuator according to any of the preceding claims,
**characterised in that** the plunger (22) is inclined with respect to an axis of the threaded element (18).

4. Actuator according to any of the preceding claims,
**characterised in that** the plunger (22) cooperates with the threaded element (18) via at least one preferably convex roller (20).

## Revendications

1. Actionneur (10) avec un entraînement rotatif (12) et un élément fileté (18) permettant de convertir le mouvement de rotation de l'entraînement rotatif (12) en un mouvement de coulissement d'un poussoir (22) relié à une soupape de décharge (34) rabattable et/ou à une géométrie de turbine variable d'un turbocompresseur à gaz d'échappement,
**caractérisé en ce que** le poussoir (22) et/ou un axe (40) entre le poussoir (22) et l'élément fileté (18) sont logés dans au moins une glissière (24, 42) avec au moins un épaulement (46), laquelle permet au moins un léger mouvement de basculement ou de pivotement du poussoir (22) dans au moins une direction (A), un jeu étant agencé entre l'épaulement et au moins un élargissement (44, 48) sur le poussoir (22) et/ou sur l'axe (40).

2. Actionneur selon la revendication 1,
**caractérisé en ce que** l'élément fileté (18) présente au moins deux zones à pas différents.

3. Actionneur selon l'une des revendications précédentes,
**caractérisé en ce que** le poussoir (22) est incliné par rapport à un axe de l'élément fileté (18).

4. Actionneur selon l'une des revendications précédentes,
**caractérisé en ce que** le poussoir (22) coopère avec l'élément fileté (18) au moyen d'au moins un galet (20) préférentiellement de forme bombée.
